# EUROPEAN PATENT APPLICATION

(11) **EP 4 822 576 A1**
(43) Date of publication of application: **14.10.2026**
(21) Application number: 26166839.6
(22) Date of filing: 23.03.2026
(51) Int. Cl.: G06F 21/62, G06F 16/215, G06N 20/00, G06Q 10/0635

(54) **SYNTHETIC DATA GENERATION INCORPORATING ADAPTIVE PRIVACY PROTECTION TECHNIQUES**

(30) Priority: 07.04.2025 US 202519172629
(71) Applicant: Microsoft Technology Licensing, LLC, Redmond, WA 98052 (US)
(72) Inventor: FARHADY GHALATY, Nahid, Redmond, Washington, 98052 (US); BHARGAV-SPANTZEL, Abhilasha, Redmond, Washington, 98052 (US)
(74) Representative: CMS Cameron McKenna Nabarro Olswang LLP

(57) **Abstract**

Systems and methods for generating synthetic data. One such method includes receiving, at a security unit, adaptive controls comprising both privacy budget constraints and compliance requirements for determining risk scores for sensitive information. The method further includes receiving, at the security unit, an input dataset comprising a plurality of data entries including sensitive information and determining a risk score in accordance with the compliance requirements for each of the plurality of data entries. The method further includes dynamically allocating, for each of the plurality of data entries, a privacy budget based on the risk score for the data entry and the privacy budget constraints. The method further includes performing adaptive remediation on the input dataset to generate a synthetic dataset, wherein adaptive remediation comprises adaptive aggregation and/or adaptive differential noise injection.

## Description

### BACKGROUND

Increasingly, organizations are relying on data-driven insights. Data relied on by these organizations often includes sensitive or private information, such as information related to customers or employees of the organization, and protecting such information is a paramount concern. To address this concern, synthetic data generation has emerged as a viable solution for providing privacy-preserving datasets.

Traditional synthetic data generation systems operate under largely static configurations that do not account for various dynamic factors, such as changing privacy requirements, utility constraints, and contextual sensitivities in the data, for example. Since traditional synthetic data generation systems operate within a static framework, the resulting synthetic data can potentially be either over- or under-protected. Over-protected synthetic data can reduce the data's utility for analytics, as the data is less representative of the original data. Under-protected synthetic data may not sufficiently preserve private or sensitive information contained in the original data.

### SUMMARY

The disclosed examples are described in detail below with reference to the accompanying drawing figures listed below. The following summary is provided to illustrate some examples disclosed herein.

The scope of this disclosure includes various systems and methods for generating synthetic data. One such method includes receiving, at a security unit, adaptive controls comprising both privacy budget constraints and compliance requirements for determining risk scores for sensitive information. The method further includes receiving, at the security unit, an input dataset comprising a plurality of data entries including sensitive information and determining a risk score in accordance with the compliance requirements for each of the plurality of data entries. The method further includes dynamically allocating, for each of the plurality of data entries, a privacy budget based on the risk score for the data entry and the privacy budget constraints. The method further includes performing adaptive remediation on the input dataset to generate a synthetic dataset, wherein adaptive remediation comprises adaptive aggregation and/or adaptive differential noise injection.

### BRIEF DESCRIPTION OF THE DRAWINGS

The disclosed examples are described in detail below with reference to the accompanying drawing figures listed below:
FIG. 1 is a block diagram illustrating an example architecture for providing adaptive privacy protection in synthetic data generation;
FIG. 2 is a block diagram illustrating operations of an example security unit of the architecture of FIG. 1 in providing adaptive privacy protection in generating synthetic data from a data entry;
FIG. 3 is a block diagram illustrating operations of the security unit of FIG. 2 in performing data pre-processing to input data;
FIG. 4 is a block diagram illustrating operations of the security unit of FIG. 2 in performing risk score calculation and privacy budget administration to input data;
FIG. 5 is a block diagram illustrating operations of the security unit of FIG. 2 in generating and validating synthetic data;
FIG. 6 is a flowchart illustrating a method for providing adaptive privacy protection in synthetic data generation; and
FIG. 7 illustrates a block diagram of an example computing device suitable for implementing some of the various examples disclosed herein.

Corresponding reference characters indicate corresponding parts throughout the drawings.

### DETAILED DESCRIPTION

Traditional synthetic data generation systems operate under largely static configurations that do not account for various dynamic factors, such as changing privacy requirements, utility constraints, and contextual sensitivities in the data, for example. Since traditional synthetic data generation systems operate within a static framework, the resulting synthetic data can potentially be either over- or under-protected. Over-protected synthetic data can reduce the data's utility for analytics, as the data is less representative of the original data. Under-protected synthetic data may not sufficiently preserve private or sensitive information contained in the original data.

To address the known consequences of the static framework employed by conventional synthetic data generation systems, disclosed are systems and methods for privacy-aware synthetic data generation. The disclosed systems allow for receiving adaptive controls for generating synthetic data from input original data, the adaptive controls including privacy budget constraints and compliance requirements. Using this information, the systems determine sensitivity or risks scores associated with each data entry of the input data. Based on the scores and the privacy budget constraints, the system dynamically allocates a privacy budget to each data entry. Based on the allocated privacy budget, the system performs adaptive remediation on the input data to generate synthetic data. The system may iteratively perform these actions to ultimately generate synthetic data that conforms to an optimal privacy level.

Aspects of the disclosure solve multiple problems that are necessarily rooted in computer technology and render use of computing platforms more efficient in highly common use cases by providing the practical result of enabling privacy-aware synthetic data generation. These advantageous results are accomplished, at least in part, by receiving adaptive controls governing the synthetic data generation, determining risk scores for the data entries of input data, dynamically allocating a privacy budget based on the risk scores, and performing adaptive remediation on the input data based on the allocated budget to generate synthetic data. In some examples, the adaptive remediation includes adaptive aggregation and/or adaptive differential noise injection. Further, in some examples of this disclosure, systems iteratively perform the adaptive remediation in order to generate synthetic data that conforms with desired privacy standards.

The various examples will be described in detail with reference to the accompanying drawings. Wherever preferable, the same reference numbers will be used throughout the drawings to refer to the same or like parts. References made throughout this disclosure relating to specific examples and implementations are provided solely for illustrative purposes but, unless indicated to the contrary, are not meant to limit all examples.

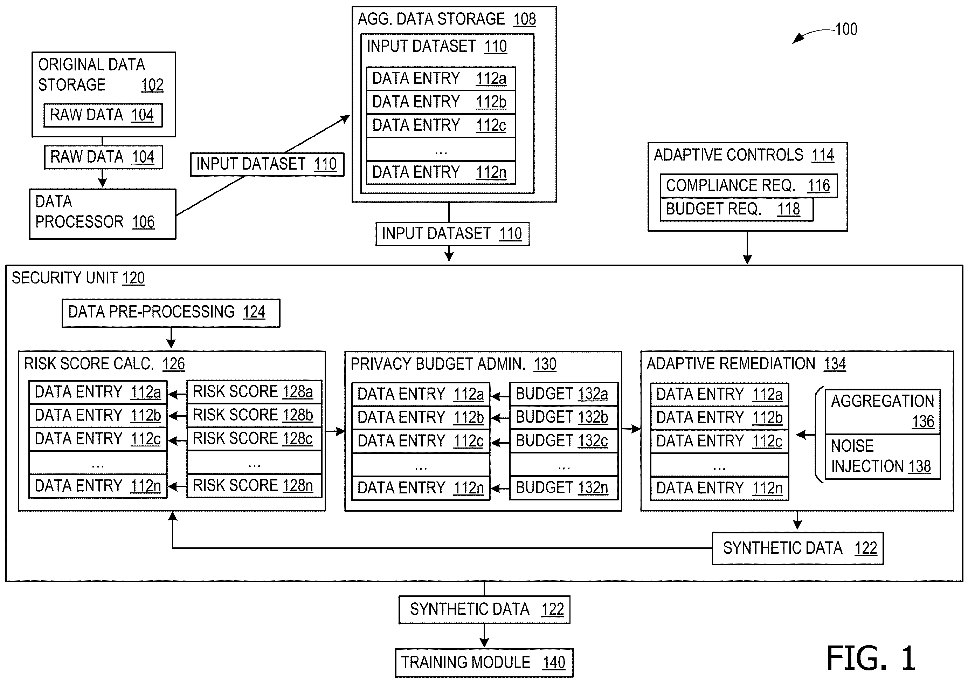

FIG. 1 illustrates an example architecture 100 for providing adaptive privacy protection in synthetic data generation. As shown, architecture 100 includes an original data storage 102 that stores raw data 104. A data processor 106 retrieves raw data 104 from original data storage 102 to form input dataset 110 and delivers the input dataset 110 to an aggregated data storage 108. Original data storage 102 and associated raw data raw data 104 can belong to an organization desiring to generate synthetic data from the raw data 104 for training of a training module; or can belong to an organization selling or otherwise providing raw data 104 to the organization desiring to generate synthetic data for training a training module.

Data processor 106 can include any of various units typically used in accessing and processing raw data, such as a data processing unit and/or data access management unit, for example. The data processor 106 can perform various operations on raw data 104 in generating the input dataset 110. For example, data processor 106 can perform adaptive data aggregation to aggregate raw data 104 of multiple forms or formats and/or from multiple sources, and process and present the raw data in a format suitable for processing by architecture 100. The aggregation of the data can be adaptive in that data processor 106 is able to process data from disparate sources and provide input dataset 110 in disparate formats, depending on the controls defined by a user of architecture 100.

Although aggregated data storage 108 depicts storing one input dataset 110 for illustrative purposes, those with skill in the art will understand aggregated data storage 108 can store numerous input datasets at any time. As shown each input dataset 110 can contain numerous data entries 112a-112n. As will be discussed in greater detail below, each data entry 112 can contain various pieces of information, including vulnerable information such as sensitive, private, or personally identifiable information, for example. Collectively, such vulnerable information may be referred to herein as "sensitive information." As those with skill in the art will understand, one reason for generating and using synthetic data for training purposes rather than the original data is to preserve and/or protect the sensitive information contained in data entries 112a-112n.

Input dataset 110 is retrieved by a security unit 120, which generates synthetic data 122 based on provided adaptive controls 114. Adaptive controls 114 can be provided to security unit 120 by a user and can enable the user to dynamically manage privacy budgets and utility trade-offs in real time. Adaptive controls 114 can include compliance requirements 116, which can incorporate industry, government, legal, and/or professional compliance standards or requirements (such as GDPR, HIPPA requirements, etc., for example), as well as user-specified privacy and utility goals. Compliance requirements 116 can include user-defined privacy goals specific to the certain pieces of sensitive information included in the data entries 112a-112n. Compliance requirements 116 can also include user-specified requirements not related to privacy preservation, such as directions for modifying certain pieces of common information for the synthetic data based on user preferences. Adaptive controls 114 can further include budget requirements 118, which can include budget constraints for generating synthetic data 122 and definitions defining how the budget is to be allocated across the input dataset 110.

Optionally, security unit 120 can perform data pre-processing 124 to input dataset 110. For example, compliance requirements 116 can define that certain pre-processing rules to be carried out by data pre-processing 124 on certain sensitive information of the data entries 112. For example, data pre-processing 124 can include adding noise to certain pieces of sensitive information to protect privacy while still keeping original statistical properties of input dataset 110 intact, as will be discussed in greater detail below.

Security unit 120 performs risk score calculations 126, where a risk scores 128a-128n are generated for each of the data entries 112a-112n of input dataset 110. Throughout this application, risk score 128 may also be referred to as a sensitivity score. The risk scores 128a-128n are determined based on the provided compliance requirements 116. As will be discussed in greater detail below, the risk score 128 can relate to how similar the data entry 112 is to the original data such that the original private, personal, or personally indefinable information can be identified or inferred from the data entry.

Security unit 120 then performs privacy budget administration 130 where a privacy budgets 132a-132n are allocated to data entries 112a-112n. As will be discussed in greater detail below, the privacy budgets 132a-132n are administered based on the provided budget requirements 118. In some examples, each privacy budget 132 is determined based on the corresponding risk score 128 for the data entry 112.

Security unit 120 then performs adaptive remediation 134 on the data entries 112a-112n. In some examples, the extent or amount of adaptive remediation 134 performed on each data entry 112 is based on the privacy budget 132 allocated to and associated with the given data entry 112. As will be discussed in greater detail below, adaptive remediation can include various remediation techniques, such as adaptive aggregation 136 and/or adaptive noise injection 138, for example and can incorporate the user of machine learning and/or artificial intelligence models.

As shown, by performing the adaptive remediation 134, security unit 120 generates synthetic data 122. Security unit 120 can perform risk score calculation 126 on the synthetic data 122 to determine whether the synthetic data 122 conforms with compliance requirements 116. In response to determining that the synthetic data 122 does not conform with compliance requirements 116, security unit 120 can iteratively perform the privacy budget administration 130 and adaptive remediation 134 until synthetic data 122 is generated that conforms to an optimal level of privacy protection as defined by compliance requirements 116, at which point the compliant synthetic data 122 can be delivered from security unit 120 to a training module 140 for use as training data. For example, training module 140 can comprise a machine learning model that utilizes synthetic data 122 for training of the machine learning model.

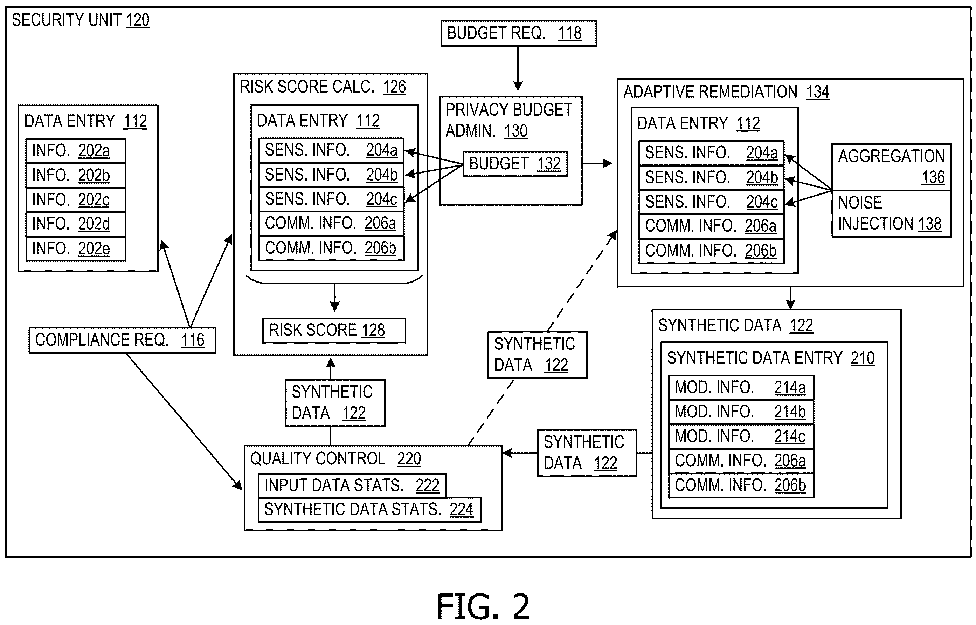

FIG. 2 illustrates how one data entry 112 of the plurality of data entries 112a-112n of input dataset 110 is processed by security unit 120 to generate synthetic data 122. Although FIG. 2 illustrates one data entry 112, those with skill in the art will understand the processing depicted is performed by security unit 120 on each of the plurality of data entries of input dataset 110. Practically, processing of one data entry 112 alone for synthetic data generation could lead to recognition of the data entry 112 from the synthetic data 122. Accordingly, in practice, the entirety of input dataset 110, which is a batch of a plurality of data entries 112, is processed according to the processes depicted in FIG. 2. However, for illustrative and explanatory purposes, one data entry 112 is depicted in FIG. 2.

Data entry 112 comprises a plurality of pieces of information 202. As shown, data entry 112 depicted includes five pieces of information 202a-202e, but those with skill in the art will understand that data entry 112 can include any number of pieces of information 202 without departing from the scope of disclosure, and that five pieces of information 202 is used for illustrative purposes. Security unit 120 applies compliance requirements 116 to data entry 112 to determine which, if any, of the pieces of information 202 should be classified as sensitive information 204, and which should be classified as common information 206.

Sensitive information, shown in this illustrative example as sensitive information 204a-204c, can be defined according to compliance requirements 116. Sensitive information 204 can be any vulnerable, sensitive, personal, and/or personally identifiable information that can be used alone or in combination with other information to identify a person, source, and/or owner associated with data entry 112. Sensitive information 204 can be defined by the user in compliance requirements 116 or can be defined by industry, government, legal, or organizational standards referenced or specified in compliance requirements 116. Pieces of information 202 not identified as sensitive information 204 can be classified by security unit 120 as common information, shown in this illustrative example as common information 206a-206b. As shown, in this illustrative example, three of the pieces of information 202a-202e of data entry 112 are identified as sensitive information 204a-204c and two of the pieces of information 202a-202e of data entry 112 are identified as common information 206a-206b.

In some examples, sensitive information 204 and common information 206 can be classified according to established confidentiality and privacy categories. For example, sensitive information 204 can include pieces of information classified as internal-use information only meant for circulation within a company or organization; confidential information restricted to certain individuals or groups; or highly confidential information classified as government data or including other legal protections. Likewise, public information that is openly available to the public can be identified as common information 206. Compliance requirements 116 can be adaptively updated by users to define these categories and how the definitions are to be applied to input dataset 110. Additionally, compliance requirements 116 can define the amount of deviation required between the synthetic data 122 and the input dataset 110 based on the confidentiality level of the information included therein. For example, compliance requirements 116 may define that synthetic data 122 for input dataset 110 including confidential information must conform to stricter compliance requirements than synthetic data 122 for an input dataset 110 that only includes publicly available information.

Security unit 120 may then performs the risk score calculation 126 by using the compliance requirements 116 to determine a risk score 128 for data entry 112 based on the sensitive information 204. Security unit 120 then performs privacy budget administration 130 by referencing budget requirements 118 and applying a privacy budget 132 to data entry 112. In some embodiments, as shown, the risk score 128 is applied a sensitive information 204 of data entry 112.

Based on the privacy budget 132 applied to sensitive information 204, security unit 120 performs adaptive remediation 134 on data entry 112. As shown, adaptive aggregation 136 and/or adaptive noise injection 138 can be performed on each piece of sensitive information 204 to modify the piece of sensitive information 204, which will be discussed in greater detail below.

Thereby, from the adaptive remediation 134, security unit 120 generates synthetic data 122 which comprises a synthetic data entry 210 corresponding to data entry 112. Synthetic data entry 210 comprises a piece of modified information 214 corresponding to each piece of sensitive information 204 modified via the adaptive remediation 134. As shown, synthetic data entry 210 comprises modified information 214a-214c corresponding to sensitive information 204a-204, respectively. Additionally, in some examples, synthetic data entry 210 retains common information 206 of data entry 112. In some examples, common information 206 does not undergo adaptive remediation 134, as the common information 206 is not identified as comprising sensitive information and thus does not need to be altered for the synthetic data 122.

Security unit 120 performs quality control 220 on synthetic data 122 to ensure that input data statistics 222 associated with statistics of the input dataset 110 and/or raw data 104 is maintained in the synthetic data statistics 224 associated with synthetic data 122. In some examples, compliance requirements 116 define a level of desired or required similarity between input data statistics 222 and synthetic data statistics 224 for satisfying the quality control 220. If the synthetic data statistics 224 does not satisfy the quality control 220 requirements, additional adaptive remediation 134 can be performed on the synthetic data 122 (as shown with the dashed-line arrow) to create new modified information 214 and thereby adjust synthetic data statistics 224 to better reflect or align with the input data statistics 222.

If security unit 120 determines that synthetic data 122 complies with quality control 220 requirements, security unit 120 performs risk score calculation 126 on the synthetic data entry 210. If the risk score 128 associated with the synthetic data entry 210 satisfies compliance requirements 116, the synthetic data 112 can be delivered from security unit 120 to training module 140, as discussed in FIG. 1. However, if the risk score 128 associated with the synthetic data entry 210 does not satisfy compliance requirements 116, the privacy budget administration 130 and adaptive remediation 134 previously discussed can be performed on synthetic data entry 210. Those with skill in the art will understand that the process taken by security unit 120 discussed herein can thereby be performed iteratively until each synthetic data entry 210 of data entry 112 satisfies compliance requirements 116.

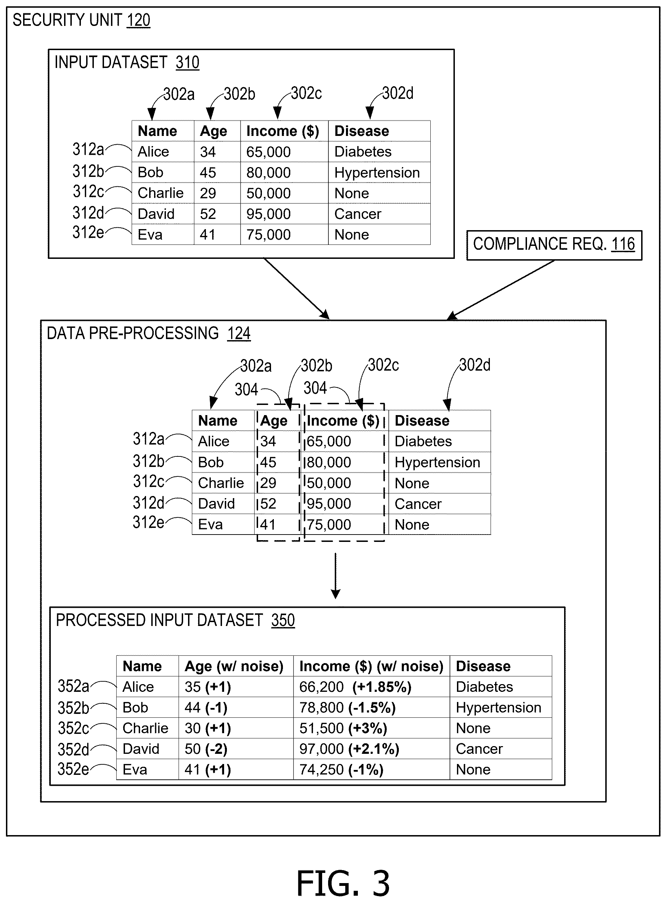

FIG. 3 is a block diagram illustrating security unit 120 performing data pre-processing 124 on an exemplary input dataset 310 (substantially similar as input dataset 110). Input dataset 310 comprises a plurality of data entries (substantially similar as data entries 112a-112n), here represented by data entries 312a-312e. Each data entry 312 comprises various pieces of information 302a-302d (substantially similar as information 202). In this illustrative example, information 302a is a person's name; information 302b is the person's age; information 302c is the person's annual income; and information 302d is a disease (if any) experienced by the person.

In performing data pre-processing 124, security unit 120 performs an initial audit of the input dataset 310 to perform initial privacy protection defined by compliance requirements 116. For example, compliance requirements 116 may include rules related to pieces of information to identify and adjust via data pre-processing 124 to protect privacy before doing any further analysis. For example, compliance requirements 116 can include rules that specific adjust information 302 classified as identifier information that can be used to identify a person (such as the person's name or social security number, for example) or quasi-identifier information that can be used to identify a person when combined with other accessible information. Further, compliance requirements 116 may include rules that data with certain data properties be adjusted.

In this illustrative example, compliance requirements 116 includes a rule that quasi-identifier information undergo data pre-processing 124. Here, security unit 120 identifies information 302b related to age and information 302c related to annual income as quasi-identifiers 304, as the two pieces of information could be used together to determine the person associated with the data. Those with skill in the art will understand that FIG. 3 depicts an illustrative example of data pre-processing 124, and that various other actions can be included in data pre-processing 124, including altering or completely discarding or removing any identifier information from input dataset 310. For example, in some embodiments, data pre-processing 124 removes name information 302a, or other personally identifiable information (PII), from input dataset 310.

Security unit 120 performs data pre-processing 124 on quasi-identifiers 304 to generate a processed input data set 350 which comprises a plurality of processed data entries, here represented by processed data entries 352a-352e. Security unit 120 generates the processed input data set by performing remediation on the identified pieces of information of input dataset 310. Here, security unit 120 adds noise to the quasi-identifiers 304, to generate processed input data set 350, as shown in FIG. 3. Those with skill in the art will understand that the data pre-processing 124 is optional step that may be performed by security unit 120, and its performance can be specified and defined by compliance requirements 116.

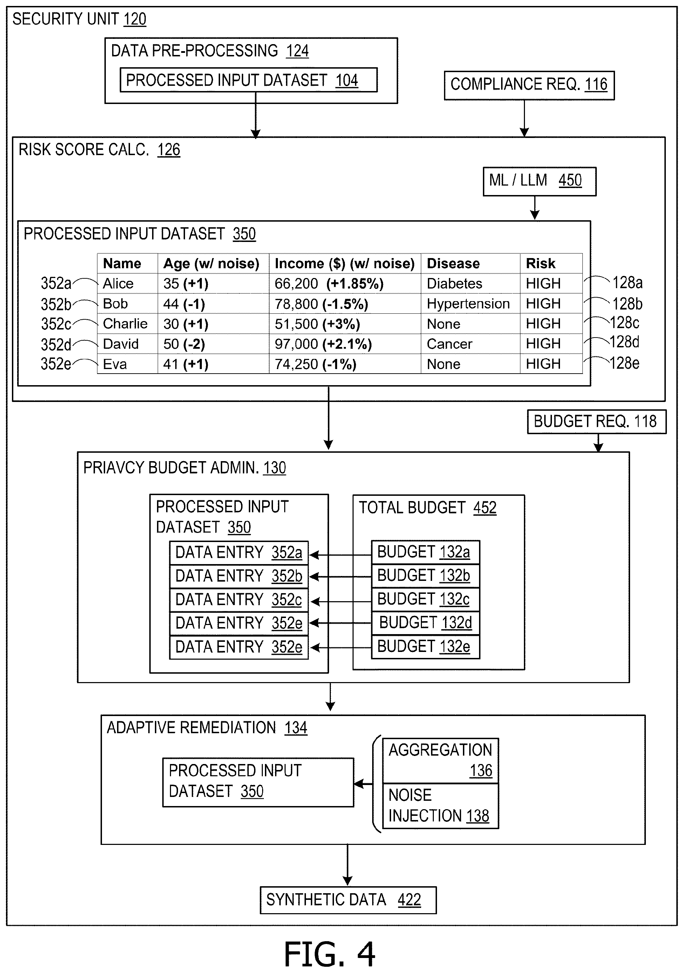

Referring now to FIG. 4, security unit 120 performs risk score calculation 126 to assign a risk score 128 to each processed data entry 352. As shown, in this illustrative example, each of the processed data entries 352a-352e is labeled with a "high" risk score due to each data entry including the name identifier as information 302a, which can be used to identify the person associated with processed data entry 352. As previously discussed, based on the risk score 128 and budget requirements 118, a budget 132 is applied to each processed data entry 352.

During risk score calculation 126, risk scores 128 can be calculated according to any of a number of methods that evaluate a risk level associated with including a piece of data as part of synthetic data. In some examples, risk score calculation 126 comprises performing the following equations computing each risk score 128, given as R_{S} in Eq. (1): ${R}_{S} = {w}_{1} ∗ {S}_{uniqueness} + {w}_{2} ∗ {S}_{inference} + {w}_{3} ∗ {S}_{type risk}$ Eq. (1)

Where the uniqueness score, *S_{uniqueness},* is a measure of how unique a piece of information's 202 values are in the dataset (for example, unique identifiers like Social Security Numbers have higher scores); the inference risk score, *S_{inference},* is an assessment of the likelihood of inferring sensitive attributes based on the a piece of information's 202 (for example, ZIP codes might indirectly reveal income levels); and the data type risk score, *S_{type risk},* is an evaluation of the intrinsic sensitivity of the a piece of information's 202 data type (for example, names, addresses, or dates of birth). Each factor can be weighted independently using *w*₁, *w*₂, and *w*₃, to allow a user to value certain factors as more important or critical than other factors in generating risk score 128.

In some examples, security unit 120 utilizes machine learning (ML) or a large language (LLM) model, together described as ML/LLM 450, in performing risk score calculation 126 and determining risk scores 128. For ML applications, feature sensitivity models can be trained on labeled datasets to predict risks based on historical privacy incidents. For example, a Random Forest classifier can categorize data entries 112, 352 as low, medium, or high risk based on attributes like uniqueness, correlation with sensitive data, and value patterns. In LLM applications, LLMs, such as fine-tuned versions of GPT, can evaluate sensitivity by analyzing feature semantics, context, and correlations. For example, an LLM can infer that a piece of information 202 labeled "SSN" has high sensitivity due to its known usage as a unique identifier. Additionally, LLMs can assess textual patterns, such as regular expressions, and semantic hints to estimate re-identification risks.

Privacy budget administration 130 may involve dividing a total budget 452 into allocated individual budgets 132a-132e for each of the processed data entries 352a-352e. The total budget 452 and rules or requirements for budget allocation can be specified in budget requirements 118. Budget requirements 118 can include optimization algorithms that can be used by security unit 120 in privacy budget administration 130 to allocate budgets 132 a-132e dynamically. For example, such algorithms can be for minimizing a utility loss function across data entries 352a-132e subject to privacy budget constraints. For example, privacy budget administration 130 can involve solving a Lagrangian multiplier problem to distribute total budget 452 optimally across processed data entries 352a-132e based on risk scores 128a-128e.

Adaptive remediation 134 is then performed on the processed input data set to generate synthetic data 422 (substantially the same as synthetic data 122). During adaptive remediation 134, security unit 120 can perform adaptive aggregation 136 and/or adaptive noise injection 138, as has been previously discussed. Adaptive aggregation 136 can include security unit 120 dynamically selecting aggregation strategies rules based on risk scores 128, such as k-anonymity, l-diversity, t-closeness, or differential clustering, for example. Adaptive aggregation 136 can include applying compliance-based thresholds that guide the selection of anonymization techniques (for example, applying stricter aggregation for compliance-critical data). In response to risk scores 128a-128e being above a threshold value, security unit 120 can apply coarse-grained aggregations techniques. In response to risk scores 128a-128e being below the threshold value, security unit 120 can apply fine-grained aggregations techniques.

Adaptive noise injection 138 may include security unit 120 injecting context-aware noise calibrated to each processed data entry's 352 risk score 128 and privacy budget 132 by using differential privacy algorithms, such as Laplace or Gaussian mechanisms, for example. That is, adaptive noise injection 138 can include dynamically adjusting a noise scale factor based on the risk score 128 and privacy budget 132 for each processed data entry 352. Adaptive noise injection 138 can include dynamically adjusting noise magnitudes to balance privacy and utility requirements specified in compliance requirements 116 and budget requirements 118.

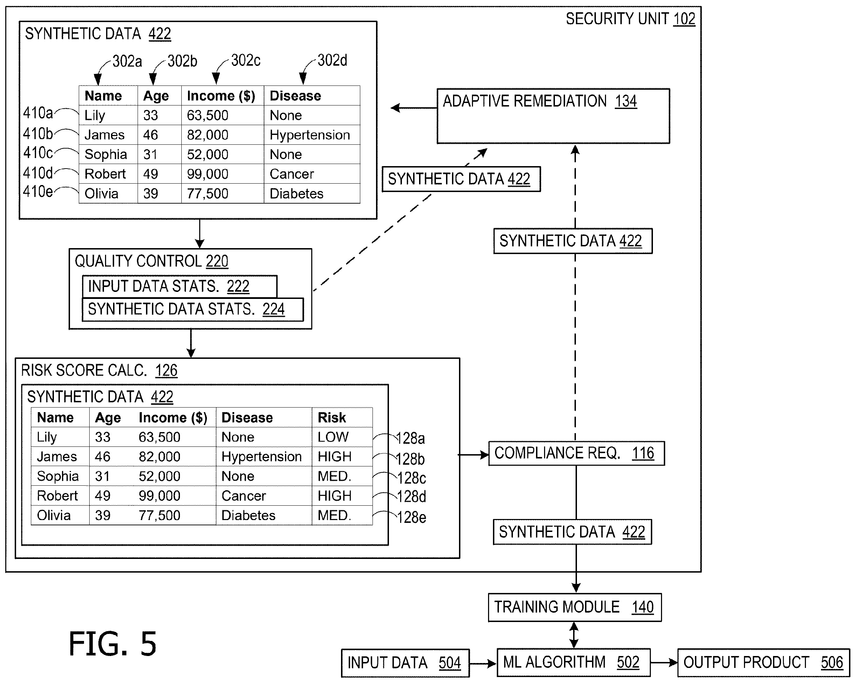

FIG. 5 illustrates the illustrative synthetic data 422 after undergoing adaptive remediation 134. Synthetic data 422 comprises a plurality of synthetic data entries 410 (substantially the same as synthetic data entries 210). As shown here, each piece of information 302a-302d is identified as sensitive information 204 and has thus been modified in adaptive remediation 134 for each of the plurality of synthetic data entries 410.

Synthetic data 422 can then undergo quality control 220, as has been previously discussed. During quality control 220, security unit 120 may assess how closely synthetic data statistics 224 mimics statistical distributions of input data statistics 222. For example, in performing these assessments, security unit 120 can use any of various appropriate mechanisms, such as KL divergence and Wasserstein distance. In response to determining the synthetic data statistics 224 of synthetic data 422 does not sufficiently align with input data statistics 222, security unit 120 again performs adaptive remediation 134, this time on synthetic data 422. In response to determining the synthetic data statistics 224 of synthetic data 422 does sufficiently align with input data statistics 222, security unit 120 performs risk score calculation 126 to assign a risk score 128a-128e to each synthetic data entry 410a-410e.

As shown, in this illustrative example, risk scores 128a is low, risk scores 128c and 128e are medium, and risk scores 128b and 128d are high. These risk scores 128 are assessed by security unit 120 according to compliance requirements 116 to determine whether the synthetic data 422 satisfies compliance requirements 116. If the risk scores 128 do not satisfy compliance requirements 116, security unit 120 again performs adaptive remediation 134 on the synthetic data 422. If the risk scores 128 do satisfy compliance requirements 116, security unit 120 delivers synthetic data 422 to training module 140. Training module 140 may use synthetic data 422 to train ML algorithms and models, as depicted by ML algorithm 502. As shown, upon being trained by training module 140, ML algorithm 502 may process input data 504 to generate an output product 506.

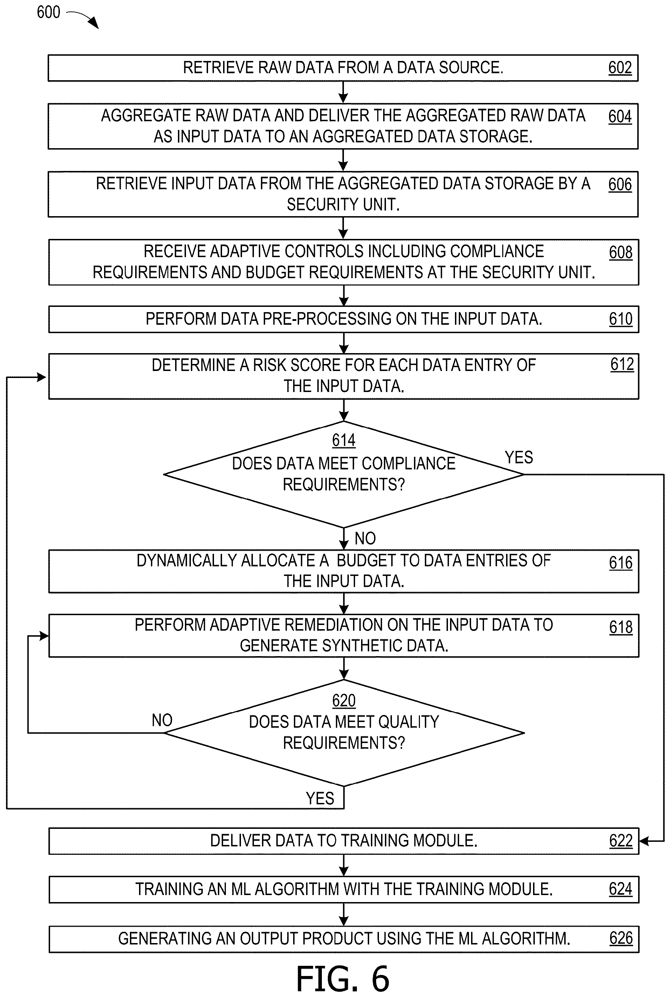

FIG. 6 is a flowchart illustrating a method 600 for generating synthetic data while incorporating adaptive privacy protections, such as by using architecture 100. Method 600 can begin at block 602 by data processor 106 retrieving raw data 104 from original data storage 102. Method 600 can continue to block 604 by data processor 106 aggregating raw data to generate input dataset 110 and delivering input dataset 110 to aggregated data storage 108.

Method 600 can continue to block 606 where security unit 120 retrieves input dataset 110 from aggregated data storage 108. Method 600 can continue to block 608 where security unit 120 retrieves adaptive controls 114, including compliance requirements 116 and budget requirements 118. Method 600 can optionally continue to block 610 where security unit 120 performs data pre-processing 124 on input dataset 110 to generate processed input dataset 310.

Method 600 can continue to block 612 where security unit 120 determines a risk score 128 for each data entry 112, 312 of the input dataset 112, 312. Method 600 can continue to block 614 where security unit 120 determines whether the risk scores 128 comply with compliance requirements 116. If the risk scores 128 are found to be compliant, the datasets can be delivered to training module 140 in block 622. If the risk scores 128 are found to be non-compliant in block 614, method 600 can continue to block 616 where security unit 120 dynamically allocates a budget 132 to each data entry 112, 312.

Method 600 can continue to block 618 where security unit 120 performs adaptive remediation 134 on the input dataset 110, 310 based on the allocated budgets 132 to generate synthetic data 122, 422. Method 600 can continue to block 620 where security unit 120 determines whether synthetic data 122, 422 meets requirements of quality control 220. In response to determining that the synthetic data 122, 422 does not meet the requirements of quality control 220, method 600 can return to block 618 where adaptive remediation 134 is again performed, this time on the synthetic data 122, 422, as an effort to generate synthetic data 122, 422 that complies with the requirements of quality control 220.

In response to determining that the synthetic data 122, 422 does meet the requirements of quality control 220, method 600 can return to block 612 where security unit 120 performs risk score calculation 126 again, this time on the synthetic data 122, 422. Method 600 can continue as previously described to block 614, where security unit 120 determines whether the risk scores 128 associated with the entries of the synthetic data 122, 422 meets compliance requirements 116.

In response to determining that the synthetic data 122, 422 meets compliance requirements 116 in block 614, method 600 continues to block 622 where the synthetic data 122, 422 is delivered to training module 140. From there, method 600 can continue to block 624 by training an ML algorithm 502 with training module 140 using synthetic data 122, 422, and then to block 626 by generating output product 506 with the trained ML algorithm 502 from input data 504. In response to determining that the synthetic data 122, 422 does not meets compliance requirements 116 in block 614, method 600 repeats the blocks previously discussed.

Those with skill in the art will understand how method 600 can be iteratively performed to ultimately generate synthetic data 122, 422 that meets compliance requirements 116 of adaptive controls 114. While method 600 is depicted as including blocks 602-626, those with skill in the art will recognize that method 600 can include more or less than blocks 602-626 without departing from the scope of this disclosure. While method 600 depicts blocks 602-626 occurring in a certain order, those with skill in the art will understand that blocks 602-626 can be performed in various orders without departing from the scope of this disclosure.

### Additional Examples

An example system comprises: a processor; and a computer-readable medium storing instructions that are operative upon execution the processor to: receive, at a security unit, adaptive controls comprising both privacy budget constraints and compliance requirements for determining risk scores for sensitive information; receive, at the security unit, an input dataset comprising a plurality of data entries including sensitive information; determine a risk score in accordance with the compliance requirements for each of the plurality of data entries; dynamically allocate, for each of the plurality of data entries, a privacy budget based on the risk score for the data entry and the privacy budget constraints; and perform adaptive remediation on the input dataset to generate a synthetic dataset, wherein adaptive remediation comprises adaptive aggregation and/or adaptive differential noise injection.

An example method for generating synthetic data, comprises: receiving, at a security unit, adaptive controls comprising both privacy budget constraints and compliance requirements for determining risk scores for sensitive information; receiving, at the security unit, an input dataset comprising a plurality of data entries including sensitive information; determining a risk score in accordance with the compliance requirements for each of the plurality of data entries; dynamically allocating, for each of the plurality of data entries, a privacy budget based on the risk score for the data entry and the privacy budget constraints; and performing adaptive remediation on the input dataset to generate a synthetic dataset, wherein adaptive remediation comprises adaptive aggregation and/or adaptive differential noise injection.

One or more example computer storage devices have computer-executable instructions stored thereon, which, on execution by a processor, cause the processor to: receive, at a security unit, adaptive controls comprising both privacy budget constraints and compliance requirements for determining risk scores for sensitive information; receive, at the security unit, an input dataset comprising a plurality of data entries including sensitive information; determine a risk score in accordance with the compliance requirements for each of the plurality of data entries; dynamically allocate, for each of the plurality of data entries, a privacy budget based on the risk score for the data entry and the privacy budget constraints; and perform adaptive remediation on the input dataset to generate a synthetic dataset, wherein adaptive remediation comprises adaptive aggregation and/or adaptive differential noise injection.

Alternatively, or in addition to the other examples described herein, examples include any combination of the following:
- using the synthetic dataset as training data for training a machine learning algorithm;
- iteratively performing the adaptive remediation in order for the synthetic dataset to meet an optimal privacy level;
- where the sensitive information is information that enables re-identification of a person, enables attribute inference of a person, or comprises personally identifiable information (PII);
- where each risk score comprises a weighted combination of at least two risk factors selected from a list consisting of: a uniqueness score, an inference score, and a data type risk score;
- where the dynamic allocation of the privacy budget comprises utilizing a utility loss function across all of the plurality of data entries based on at least the privacy budget constraints;
- in response to the risk score being above a threshold value, utilizing a coarse-grained aggregation strategy in performing the adaptive aggregation;
- in response to the sensitivity being below the threshold value, utilizing a fine-grained aggregation strategy in performing the adaptive aggregation;
- performing the adaptive differential noise injection by dynamically adjusting a noise scale factor based on the risk score the privacy budget;
- where the compliance requirements comprise privacy requirements and industry, requirements from government, legal, and/or professional compliance standards;
- where the compliance requirements comprise use-specified requirements for modifying common information based on user preferences;
- determining the risk scores using an ML model or an LLM;
- dynamically allocating a privacy budget comprises solving a Lagrangian multiplier problem to distribute the privacy budgets optimally across data entries of the input dataset;
- generating the synthetic data set based on at least the input dataset comprises transforming the input dataset into the synthetic data set;
- where adaptive aggregation comprises k-anonymity, l-diversity, t-closeness, or differential clustering; and
- adaptive noise injection comprises using differential privacy algorithms such as Laplace or Gaussian mechanisms.

### Example Operating Environment

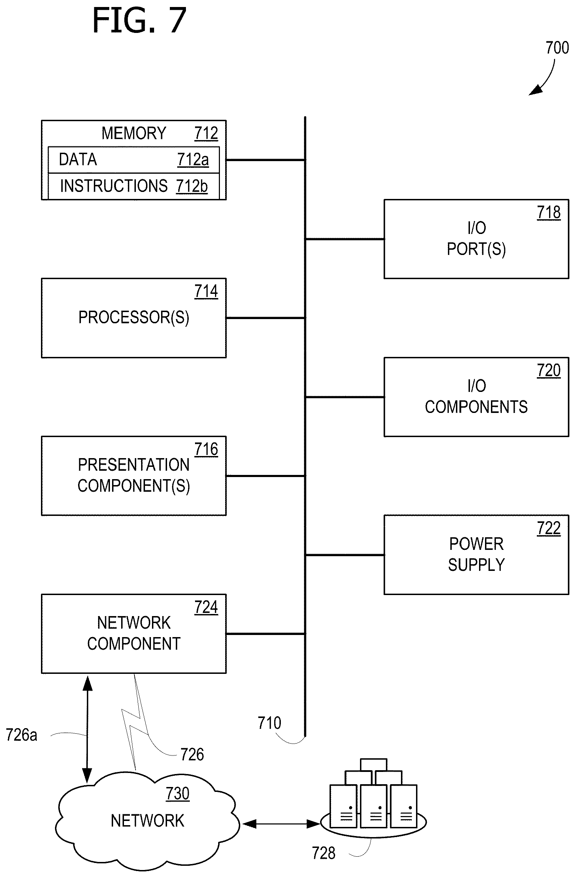

FIG. 7 is a block diagram of an example computing device 700 (e.g., a computer storage device) for implementing aspects disclosed herein, and is designated generally as computing device 700. In some examples, one or more computing devices 700 are provided for an on-premises computing solution. In some examples, one or more computing devices 700 are provided as a cloud computing solution. In some examples, a combination of on-premises and cloud computing solutions are used. Computing device 700 is but one example of a suitable computing environment and is not intended to suggest any limitation as to the scope of use or functionality of the examples disclosed herein, whether used singly or as part of a larger set.

Neither should computing device 700 be interpreted as having any dependency or requirement relating to any one or combination of components/modules illustrated. The examples disclosed herein may be described in the general context of computer code or machine-useable instructions, including computer-executable instructions such as program components, being executed by a computer or other machine, such as a personal data assistant or other handheld device. Generally, program components including routines, programs, objects, components, data structures, and the like, refer to code that performs particular tasks, or implement particular abstract data types. The disclosed examples may be practiced in a variety of system configurations, including personal computers, laptops, smart phones, mobile tablets, hand-held devices, consumer electronics, specialty computing devices, etc. The disclosed examples may also be practiced in distributed computing environments when tasks are performed by remote-processing devices that are linked through a communications network.

Computing device 700 includes a bus 710 that directly or indirectly couples the following devices: computer storage memory 712, one or more processors 714, one or more presentation components 716, input/output (I/O) ports 718, I/O components 720, a power supply 722, and a network component 724. While computing device 700 is depicted as a seemingly single device, multiple computing devices 700 may work together and share the depicted device resources. For example, memory 712 may be distributed across multiple devices, and processor(s) 714 may be housed with different devices.

Bus 710 represents what may be one or more buses (such as an address bus, data bus, or a combination thereof). Although the various blocks of FIG. 7 are shown with lines for the sake of clarity, delineating various components may be accomplished with alternative representations. For example, a presentation component such as a display device is an I/O component in some examples, and some examples of processors have their own memory. Distinction is not made between such categories as "workstation," "server," "laptop," "hand-held device," etc., as all are contemplated within the scope of FIG. 7 and the references herein to a "computing device." Memory 712 may take the form of the computer storage media referenced below and operatively provide storage of computer-readable instructions, data structures, program modules and other data for the computing device 700. In some examples, memory 712 stores one or more of an operating system, a universal application platform, or other program modules and program data. Memory 712 is thus able to store and access data 712a and instructions 712b that are executable by processor 714 and configured to carry out the various operations disclosed herein. Thus, computing device 700 comprises a computer storage device having computer-executable instructions 712b stored thereon.

In some examples, memory 712 includes computer storage media. Memory 712 may include any quantity of memory associated with or accessible by the computing device 700. Memory 712 may be internal to the computing device 700 (as shown in FIG. 7), external to the computing device 700 (not shown), or both (not shown). Additionally, or alternatively, the memory 712 may be distributed across multiple computing devices 700, for example, in a virtualized environment in which instruction processing is carried out on multiple computing devices 700. For the purposes of this disclosure, "computer storage media," "computer storage memory," "memory," and "memory devices" are synonymous terms for the memory 712, and none of these terms include carrier waves or propagating signaling.

Processor(s) 714 may include any quantity of processing units that read data from various entities, such as memory 712 or I/O components 720. Specifically, processor(s) 714 are programmed to execute computer-executable instructions for implementing aspects of the disclosure. The instructions may be performed by the processor, by multiple processors within the computing device 700, or by a processor external to the client computing device 700. In some examples, the processor(s) 714 are programmed to execute instructions such as those illustrated in the flow charts discussed below and depicted in the accompanying drawings. Moreover, in some examples, the processor(s) 714 represents an implementation of analog techniques to perform the operations described herein. For example, the operations may be performed by an analog client computing device 700 and/or a digital client computing device 700. Presentation component(s) 716 present data indications to a user or other device. Exemplary presentation components include a display device, speaker, printing component, vibrating component, etc. One skilled in the art will understand and appreciate that computer data may be presented in a number of ways, such as visually in a graphical user interface (GUI), audibly through speakers, wirelessly between computing devices 700, across a wired connection, or in other ways. I/O ports 718 allow computing device 700 to be logically coupled to other devices including I/O components 720, some of which may be built in. Example I/O components 720 include, for example but without limitation, a microphone, joystick, game pad, satellite dish, scanner, printer, wireless device, etc.

Computing device 700 may operate in a networked environment via the network component 724 using logical connections to one or more remote computers. In some examples, the network component 724 includes a network interface card and/or computer-executable instructions (e.g., a driver) for operating the network interface card. Communication between the computing device 700 and other devices may occur using any protocol or mechanism over any wired or wireless connection. In some examples, network component 724 is operable to communicate data over public, private, or hybrid (public and private) using a transfer protocol, between devices wirelessly using short range communication technologies (e.g., near-field communication (NFC), Bluetooth^{™} branded communications, or the like), or a combination thereof. Network component 724 communicates over wireless communication link 726 and/or a wired communication link 726a to a remote resource 728 (e.g., a cloud resource) across network 730. Various different examples of communication links 726 and 726a include a wireless connection, a wired connection, and/or a dedicated link, and in some examples, at least a portion is routed through the internet.

Although described in connection with an example computing device 700, examples of the disclosure are capable of implementation with numerous other general-purpose or special-purpose computing system environments, configurations, or devices. Examples of well-known computing systems, environments, and/or configurations that may be suitable for use with aspects of the disclosure include, but are not limited to, smart phones, mobile tablets, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, virtual reality (VR) devices, augmented reality (AR) devices, mixed reality devices, holographic device, and the like. Such systems or devices may accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions, or the specific components or modules illustrated in the figures and described herein. Other examples of the disclosure may include different computer-executable instructions or components having more or less functionality than illustrated and described herein. In examples involving a general-purpose computer, aspects of the disclosure transform the general-purpose computer into a special-purpose computing device when configured to execute the instructions described herein.

By way of example and not limitation, computer readable media comprise computer storage media and communication media. Computer storage media include volatile and nonvolatile, removable and non-removable memory implemented in any method or technology for storage of information such as computer readable instructions, data structures, program modules, or the like. Computer storage media are tangible and mutually exclusive to communication media. Computer storage media are implemented in hardware and exclude carrier waves and propagated signals. Computer storage media for purposes of this disclosure are not signals per se. Exemplary computer storage media include hard disks, flash drives, solid-state memory, phase change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that may be used to store information for access by a computing device. In contrast, communication media typically embody computer readable instructions, data structures, program modules, or the like in a modulated data signal such as a carrier wave or other transport mechanism and include any information delivery media.

The order of execution or performance of the operations in examples of the disclosure illustrated and described herein is not essential, and may be performed in different sequential manners in various examples. For example, it is contemplated that executing or performing a particular operation before, contemporaneously with, or after another operation is within the scope of aspects of the disclosure. When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

Systems and methods for generating synthetic data. One such method includes receiving, at a security unit, adaptive controls comprising both privacy budget constraints and compliance requirements for determining risk scores for sensitive information. The method further includes receiving, at the security unit, an input dataset comprising a plurality of data entries including sensitive information and determining a risk score in accordance with the compliance requirements for each of the plurality of data entries. The method further includes dynamically allocating, for each of the plurality of data entries, a privacy budget based on the risk score for the data entry and the privacy budget constraints. The method further includes performing adaptive remediation on the input dataset to generate a synthetic dataset, wherein adaptive remediation comprises adaptive aggregation and/or adaptive differential noise injection.

In an example, there is provided a system comprising: a processor; and a computer-readable medium storing instructions that are operative upon execution by the processor to: receive, at a security unit, adaptive controls comprising both privacy budget constraints and compliance requirements for determining risk scores for sensitive information; receive, at the security unit, an input dataset comprising a plurality of data entries including the sensitive information; determine a risk score in accordance with the compliance requirements for each of the plurality of data entries; dynamically allocate, for each data entry of the plurality of data entries, a privacy budget based on the risk score for the data entry and the privacy budget constraints; and perform adaptive remediation on the input dataset to generate a synthetic dataset, wherein the adaptive remediation comprises adaptive aggregation and/or adaptive differential noise injection.

In an example, the synthetic dataset is configured to be used as training data for training a machine learning algorithm.

In an example, the computer-readable medium further stores instructions that are operative upon execution by the processor to iteratively perform the adaptive remediation in order for the synthetic dataset to meet an optimal privacy level.

In an example, the sensitive information is information that enables re-identification of a person, enables attribute inference of the person, or comprises personally identifiable information (PII).

In an example, each risk score comprises a weighted combination of at least two risk factors selected from a list consisting of: a uniqueness score, an inference score, and a data type risk.

In an example, the dynamically allocating the privacy budget comprises utilizing a utility loss function across all of the plurality of data entries based on at least the privacy budget constraints.

In an example, the computer-readable medium further stores instructions that are operative upon execution by the processor to: in response to determining that the risk score is above a threshold value, utilize a coarse-grained aggregation strategy in performing the adaptive aggregation; in response to determining that the risk score is below the threshold value, utilize a fine-grained aggregation strategy in performing the adaptive aggregation; and perform the adaptive differential noise injection by dynamically adjusting a noise scale factor based on the risk score the privacy budget.

In an example, there is provided a method for generating synthetic data, comprising: receiving, at a security unit, adaptive controls comprising both privacy budget constraints and compliance requirements for determining risk scores for sensitive information; receiving, at the security unit, an input dataset comprising a plurality of data entries including the sensitive information; determining a risk score in accordance with the compliance requirements for each of the plurality of data entries; dynamically allocating, for each data entry of the plurality of data entries, a privacy budget based on the risk score for the data entry and the privacy budget constraints; and performing adaptive remediation on the input dataset to generate a synthetic dataset, wherein the adaptive remediation comprises adaptive aggregation and/or adaptive differential noise injection.

In an example, the method further comprises: delivering the synthetic dataset to a training module; training a machine learning algorithm via the training module with the synthetic dataset; and generating an output product using the machine learning algorithm.

In an example, the method further comprises iteratively performing the adaptive remediation in order for the synthetic dataset to meet an optimal privacy level.

In an example, the sensitive information is information that enables re-identification of a person, enables attribute inference of the person, or comprises personally identifiable information (PII).

In an example, each risk score comprises a weighted combination of at least two risk factors selected from a list consisting of: a uniqueness score, an inference score, and a data type risk.

In an example, the dynamically allocating the privacy budget comprises utilizing a utility loss function across all of the plurality of data entries based on at least the privacy budget constraints.

In an example, the method further comprises: in response to determining that the risk score is above a threshold value, utilize a coarse-grained aggregation strategy in performing the adaptive aggregation; and in response to determining that the risk score is below the threshold value, utilize a fine-grained aggregation strategy in performing the adaptive aggregation.

In an example, the method further comprises performing the adaptive differential noise injection by dynamically adjusting a noise scale factor based on the risk score the privacy budget.

In an example, there is provided a computer-readable medium storing instructions that are operative upon execution by a processor to: receive, at a security unit, adaptive controls comprising both privacy budget constraints and compliance requirements for determining risk scores for sensitive information; receive, at the security unit, an input dataset comprising a plurality of data entries including sensitive information; determine a risk score in accordance with the compliance requirements for each of the plurality of data entries; dynamically allocate, for each data entry of the plurality of data entries, a privacy budget based on the risk score for the data entry and the privacy budget constraints; and perform adaptive remediation on the input dataset to generate a synthetic dataset, wherein adaptive remediation comprises adaptive aggregation and/or adaptive differential noise injection.

In an example, the computer-readable medium further stores instructions that are operative upon execution by the processor to iteratively perform the adaptive remediation in order for the synthetic dataset to meet an optimal privacy level.

In an example, each risk score comprises a weighted combination of at least two risk factors selected from a list consisting of: a uniqueness score, an inference score, and a data type risk.

In an example, the dynamically allocating the privacy budget comprises utilizing a utility loss function across all of the plurality of data entries based on at least the privacy budget constraints.

In an example, the computer-readable medium further stores instructions that are operative upon execution by the processor to: in response to determining that the risk score is above a threshold value, utilize a coarse-grained aggregation strategy in performing the adaptive aggregation; in response to determining that the risk score is below the threshold value, utilize a fine-grained aggregation strategy in performing the adaptive aggregation; and perform the adaptive differential noise injection by dynamically adjusting a noise scale factor based on the risk score the privacy budget.

## Claims

1. A system comprising:
a processor (714); and
a computer-readable medium (712) storing instructions that are operative upon execution by the processor to:
receive, at a security unit (120), adaptive controls (114) comprising both privacy budget constraints (118) and compliance requirements (116) for determining risk scores for sensitive information;
receive, at the security unit (120), an input dataset (110) comprising a plurality of data entries (112) including the sensitive information;
determine a risk score (128) in accordance with the compliance requirements (116) for each of the plurality of data entries (112);
dynamically allocate, for each data entry of the plurality of data entries (112), a privacy budget (132) based on the risk score (128) for the data entry (112) and the privacy budget constraints (118); and
perform adaptive remediation (134) on the input dataset (110) to generate a synthetic dataset (122), wherein the adaptive remediation (134) comprises adaptive aggregation (136) and/or adaptive differential noise injection (138).

2. The system of claim 1, wherein the synthetic dataset is configured to be used as training data for training a machine learning algorithm.

3. The system of any of claims 1 or 2, wherein the computer-readable medium further stores instructions that are operative upon execution by the processor to iteratively perform the adaptive remediation in order for the synthetic dataset to meet an optimal privacy level.

4. The system of any preceding claim, wherein the sensitive information is information that enables re-identification of a person, enables attribute inference of the person, or comprises personally identifiable information (PII).

5. The system of any preceding claim, wherein each risk score comprises a weighted combination of at least two risk factors selected from a list consisting of: a uniqueness score, an inference score, and a data type risk.

6. The system of any preceding claim, wherein the dynamically allocating the privacy budget comprises utilizing a utility loss function across all of the plurality of data entries based on at least the privacy budget constraints.

7. A method for generating synthetic data, comprising:
receiving, at a security unit (120), adaptive controls (114) comprising both privacy budget constraints (118) and compliance requirements (116) for determining risk scores for sensitive information;
receiving, at the security unit (120), an input dataset (110) comprising a plurality of data entries (112) including the sensitive information;
determining a risk score (128) in accordance with the compliance requirements (116) for each of the plurality of data entries (112);
dynamically allocating, for each data entry of the plurality of data entries (112), a privacy budget (132) based on the risk score (128) for the data entry (112) and the privacy budget constraints (118); and
performing adaptive remediation (134) on the input dataset (110) to generate a synthetic dataset (122), wherein the adaptive remediation (134) comprises adaptive aggregation (136) and/or adaptive differential noise injection (138).

8. The method of claim 7, further comprising:
delivering the synthetic dataset to a training module;
training a machine learning algorithm via the training module with the synthetic dataset; and
generating an output product using the machine learning algorithm.

9. The method of any of claims 7 or 8, further comprising iteratively performing the adaptive remediation in order for the synthetic dataset to meet an optimal privacy level.

10. The method of any of claims 7 to 9, wherein the sensitive information is information that enables re-identification of a person, enables attribute inference of the person, or comprises personally identifiable information (PII).

11. The method of any of claims 7 to 10, wherein each risk score comprises a weighted combination of at least two risk factors selected from a list consisting of: a uniqueness score, an inference score, and a data type risk.

12. The method of any of claims 7 to 11, wherein the dynamically allocating the privacy budget comprises utilizing a utility loss function across all of the plurality of data entries based on at least the privacy budget constraints.

13. The method of any of claims 7 to 12, further comprising:
in response to determining that the risk score is above a threshold value, utilize a coarse-grained aggregation strategy in performing the adaptive aggregation; and
in response to determining that the risk score is below the threshold value, utilize a fine-grained aggregation strategy in performing the adaptive aggregation.

14. The method of any of claims 7 to 13, further comprising performing the adaptive differential noise injection by dynamically adjusting a noise scale factor based on the risk score the privacy budget.

15. A computer-readable medium storing instructions that are operative upon execution by a processor to perform the method of any of claims 7 to 14.
